# EUROPEAN PATENT SPECIFICATION

(11) **EP 2 640 006 B1**
(45) Date of publication and mention of the grant of the patent: **10.04.2019**
(21) Application number: 13157027.7
(22) Date of filing: 27.02.2013
(51) Int. Cl.: H04L 12/26, H04L 29/08, H04L 12/24

(54) **METHOD AND SYSTEM FOR SERVICE QUALITY INDICATION IN END-TO-END DELIVERY OF IP BASED SERVICES**
VERFAHREN UND SYSTEM ZUR ANGABE DER DIENSTQUALITÄT BEI DER END-TO-END-BEREITSTELLUNG VON IP-BASIERTEN DIENSTEN
PROCÉDÉ ET SYSTÈME D'INDICATION DE QUALITÉ DE SERVICE DANS LA LIVRAISON BOUT À BOUT DE SERVICES BASÉS SUR IP

(30) Priority: 13.03.2012 EP 12159195
(43) Date of publication of application: 18.09.2013
(73) Proprietor: Deutsche Telekom AG, 53113 Bonn (DE)
(72) Inventor: Korthals, Isabelle, 10587 Berlin (DE); Grundhöfer, Uwe, 53639 Königswinter (DE); Bonneß, Olaf, 31535 Neustadt am Rübenberge (DE); Dhakal, Sabin, 13156 Berlin (DE); Sivchenko, Dimitry, 64285 Darmstadt (DE); Bayer, Nico, 61231 Bad Nauheim (DE); Roos, Andreas, 64354 Reinheim (DE); Einsiedler, Hans-Joachim, 13189 Berlin (DE)
(74) Representative: Vossius & Partner Patentanwälte Rechtsanwälte mbB

(56) References cited:
- WO-A1-2009/019671
- US-A1- 2007 258 460
- US-A1- 2009 024 736

## Description

### State-of-the-Art and problem statement

Service provisioning in customer satisfying quality is one of the most important issues for network and content providers. Basically, the network performance influences the data transmission and thus, the quality of a provided IP based service to a user as well. The degree of affecting the service quality depends on the service type, e.g. voice over IP (VoIP), online gaming, video conferencing, video on demand, chat, web surfing or e-mailing to be transmitted via the network. Services, e.g. voice or video demand for specific network performance to be transmitted via a network to fulfil the quality of experience (QoE) of a user. Moreover, the quality sensation of users depends on the used service type, the service price as well as the situation in which the user is using the service.

Today's IP based mass market services in the Internet, such as web surfing, chatting or mailing are transported in best effort traffic class. In order to support quality-sensitive services, such as VoIP, online gaming, video conferencing or Video on demand (VoD) streaming better than best effort traffic has been realised in networks by means of Quality of Service (QoS) mechanisms (and/or Class of Service (CoS), Type of Service (ToS)). QoS mechanisms can be applied in network architectures to manage network performance in order to provide the necessary network performance to deliver the service in QoE fulfilling quality. However, in some situations the network capacity is not sufficient enough in some network segments, e.g. network access, to deliver the service in expected quality. This behaviour can occur even when QoS mechanisms are applied inside the networks along the data path. As a result, the user is not satisfied with the provided service. Besides that, on the one hand side the application server is not aware of the degraded network performance in order to adapt the service to the available network performance and on the other hand side the user is not aware of the realizable service quality to be expected after service initiation.

With regard to additional software features on user devices, such as video player that is able to control the video quality (e.g. resolution or codec of the video) depending on the video player configuration it is useful to have the possibility for the network-centric evaluation whether the service is realizable in the user requested quality. For such network centric mechanisms the evaluation unit needs to have information about the network capabilities along the whole network transport path (including the access network parts and the transit network parts) as well as the network quality requirements specified by the application service. The result of the investigations of the network evaluation unit can then be used to inform the user about the expected service quality that could be really delivered based on recent network conditions.

Moreover, the evaluation result can be applied for network-centric service adaptation of network capabilities.

Recent IP networks (e.g. of a network operator) usually implement mechanisms for QoS support. For instance, these QoS mechanisms may be based on differentiation of IP packets on selected routers at edges of the operator's network while putting them into different pipes/tunnels based on MPLS or VLAN labels. QoS differentiation is then for instance implemented by using different scheduler mechanisms and scheduling priorities or by special shaping rules for different pipes/queues. In principle the differentiation of the packets is done at the ingress router of a network domain, where special rules and profiles are applied to mark the respective packets. Afterwards the packets are distributed into different queues and are scheduled according to these rules/profiles. Re-marking and classification are done only at egress and ingress level [1]. Any other QoS mechanism can also be applied in the network - either in core or in access networks.

US 2007/258460 A1 discloses using a content clearing house to manage content capabilities, esp. QoS, between an end user and a content server, via multiple networks, with the clearing house acting as mediator between all involved network and content providers. Also includes a solution for userprofile-based content screening and for billing.

US 2009/024736 A1 discloses a solution for assessing network performance for delivering streaming content to users via the Internet and for dealing with a capacity constraint in the network, by allowing a user to select an alternative format to get the content in case of such a constraint.

There are frameworks, such as the IP Multimedia Subsystem (IMS) [2], the Resource and Admission Control Subsystem (RACS) [3] and the Network Attachment Subsystem (NASS) [4] which describe functional entities and interfaces to provide and exchange control (and QoS) information / parameters between functional entities. Moreover, there are QoS-related architectures described, such as the ITU-T NGN [5] and Economics and Technologies for Inter-Carrier Services (ETICS) [6] to provide network and application control reference architectures for next generation networks.

With the aim to provide common interfaces to exchange information / parameters between network or application entities there are protocols or application programmable interfaces (APIs), e.g. GSMA OneAPI [7], Enabler Release Definition for Next Generation Service Interfaces [8] specified. These interfaces can be used to design and implement individual (and also QoS-related) services.

Available QoS mechanisms are usually configured statically which means that classification rules are pre-defined and use pre-defined IP addresses or/and port numbers. Theoretically, traffic classification could also be based on the Type of Service (TOS) field of the IP header. (Nowadays this field has been renamed to the Differentiated Services Code Point (DSCP).) However, this is not a common praxis in many real networks as the TOS field is usually set by the (end user) application and therefore is not under the control of the network operator.

In general, one goal of QoS mechanisms is to support / enable different data transport quality commitments to users. By means of QoS mechanisms and / or CoS and / or ToS quality commitments can indeed be improved and be a bit more concrete, however, only relative qualities can be promised. For instance, a reserved gold class that is in the network has a higher priority than the silver class. As a result, in the bottleneck case the gold class will be transported with a better quality relative to the silver class. However, this means, absolute end-to-end qualities cannot be realized. The situation is comparable to transport classes in passenger trains. By booking a first class ticket on the German Federal Railways rises the quality of transport relative to the second class. However, the consumer purchases only with a seat reservation the absolute quality of a seat guarantees. Without this seat reservation the customer gets a standing place in the case of overloaded demand of seats even in the first class. In order to enable quality guarantees in IP based networks a technical solution (e.g. evaluation entity) is needed which avoids overbooking of available network in the case of induced demand.

In real networks, traffic classification is usually based on IP addresses, protocol types and port numbers (so called "5-tuple"). This means that QoS provisioning for applications with static IP or port numbers can easily be implemented in this way. However, the implementation of such QoS mechanisms in the data path from the source (e.g. content provider) to the destination (e.g. customer) does not guarantees a service provisioning in customer satisfying quality. This is based on the fact that QoS mechanisms are implemented independently from each other in the different network domains. Hence, the QoS mechanisms are not aware of each other and have no knowledge about available network resources within the other network segments. In the case of insufficient network resources in the end-to-end (E2E) data path (e.g. by local network overload) the delivered E2E service is hence influenced in its quality. As a result, the expected quality of experience of the customer can not be fulfilled. Moreover, static configuration based on a 5-tuple does not work properly in the case where IP addresses or the port numbers of IP flows change along the data path. A typical example of such a case is video streaming (e.g. provided by a number of application provider in today's Internet) where source IP address and destination port number can be very dynamic depending on used streaming server and client. In order to enable QoS support for such services in IP networks, an external interface is typically implemented and offered for services for which QoS must be supported in the network.

The frameworks mentioned above, such as IMS [2], RACS [3], NASS [4], ITU-T NGN [5] and ETICS [6] describe well defined network and control architectures for next generation networks and next generation service provisioning, including the provisioning and realization of QoS-based services. However, the deployment of such frameworks in network and content provider network architectures is still in progress or will even never happen at all. For example, IMS is yet not widely installed and supported. The reason for that can be found in the fact that these architectures are very complex and heavy weight, and require very often a deployment of new systems and devices within the network operator and service provider infrastructures.

On the other hand, the APIs mentioned above, such as OneAPI [7] and Enabler Release Definition for Next Generation Service Interfaces [8] provide a solid base to develop individual added value services.

In both cases a challenge for frameworks and APIs consists in the requirement, that network operators and also operators of application servers (offering an application service) must agree on the used interfaces and their implementation. To avoid introduction of multiple different interfaces by different network operators and per service, the control interface should be standardised. Currently the work for the definition and standardisation of such interfaces is still ongoing. However, it will take additional time for the finalisation of these standardisation activities as well as for their implementation and deployment. As a consequence it becomes obvious, that this option is rather a mid-term solution.

Furthermore, all the QoS mechanisms, the frameworks and the APIs mentioned above are not able to enhance the QoE of an end user regarding the expected quality in which the requested service will be delivered or regarding an answer to the question if the requested service is realizable in the requested quality at all. This means, the user is not informed about the service quality (and service quality degradation) he has to expect.

Accordingly, there is a need to overcome the above mentioned drawbacks of the art. In particular, it is an object of the invention to provide a new method and system which provides feedback to the user about the realizable service quality.

### Summary of the Invention

The objects of the invention are achieved by the features of the independent claims. The dependent claims refer to further preferred embodiments of the invention.

A new method and system are proposed to provide a feedback system to inform the user about the realizable service quality of an Internet service. The feedback system preferably utilises web services and preferably requires neither additional hardware nor software within the end user terminal. By means of such a feedback system a technical solution is realised to enable quality guarantees in IP based networks due to the avoidance of network resource overbooking. This feedback mechanism can then be deployed for a huge number of IP-based services and builds the basis for a network-centric evaluation in order to signal the really realizable service quality to the end user.

An application server is preferably located in the network of the content provider, and said application service request from the user is preferably sent to the application server via the content provider; said application server preferably initiates via S2 the network capability discovery process when the application service request is recognized.

Preferably, the evaluation entity support entity at the content provider obtains the application service related requirements from a service profile database which is connected to the application server.

The evaluation entity support entities preferably obtain the available network performance information from corresponding connectivity profile databases which are connected to the corresponding network segments.

The evaluation entity is preferably a service quality indicator and the evaluation entity support entity is a service quality indicator instance.

The application service related requirements and the available network performance information are preferably sent from the respective evaluation entity support entities upon request from the evaluation entity.

The application service related requirements and/or available network performance information are preferably obtained via an interface (interface 1, interface 2, interface 3, interface 4) realized preferably by SOAP.

Preferably, at least one identifier for the user, application service and device for which the network capability discovery process has been initiated is sent to the application server.

The user and/or device may be identified by using the IP address, IPv6 address/prefix and/or MAC addresses of its network interfaces or by using other means for user or device identification (e.g. International Mobile Subscriber Identity (IMSI)).

Further information about network capabilities may include maximal available bandwidth as well as any other network capability related information.

IP address or IPv6 address prefix or also any other parameter for the identification of a networked (e.g. MAC address, IMSI) device could be the key field to identify the suitable evaluation entity support entities.

Preferably, a service quality indication feedback is based on the result of the comparing process of the service quality indicator. The service quality indication feedback is send to the device to inform him/her whether the requested application service is realizable in the user requested quality.

The present invention preferably also provides a system configured to evaluate the realizable service quality for users in IP-based networks, the system comprising: an evaluation entity for conducting a network capability discovery process for a requested application service; an evaluation entity support entity at a content provider to send application service related requirements regarding network performance from said evaluation entity support entity at the content provider to the evaluation entity; evaluation entity support entities at/in said network segments to send available network performance information on available network capability on said network segments to said evaluation entity; wherein said evaluation entity is further adapted to compare the received available network performance information with the received application service related requirements, and to send result on the basis of said comparing from the evaluation entity to the evaluation entity support entity at the content provider such that the content provider is aware whether the requested application service is realizable.

The present invention presents a new method and system for a network-centric evaluation of realizable service quality for users in IP-based networks. Using this method the evaluation entity is able to request the end-to-end network path capabilities used by a user and to request the network performance requirements (e.g. delay, jitter, packet loss) of a service that are needed to transport the service in good quality to the user. Preferably, no extensions of the software or hardware are required on the end user terminal side. The identification of user network profiles and user service profiles is preferably based on IP addresses of the Internet connecting interfaces and on user IDs.

In order to request IP-based application services the user device is preferably connected to the Internet via an access network provided by a network provider and to a content provider that offers the IP-based application service. In today's IP-based service provisioning the application server of the content provider starts providing the service after the user requests the service.

For example the user connects to a video portal. After successful user authentication the user is allowed to consume the available videos. The service provisioning process will be started at the moment when the user initiates the download and/or playing of a video. Based on the video initiation process the application server is triggered to start service delivery to the user. The service is delivered to the IP address of the user device. The user device received its IP address from the corresponding network access provider. However, in this service delivery process the application server is not aware of the network performance for instance within the remote access network. This means the application server starts service delivery independently of the information whether the network capabilities are sufficient enough to deliver the service in good quality or if the service quality, and hence the user QoE, will be degraded.

In the case, that the user is not allowed to consume the video due to cost / credit constrains the user will be informed by a feedback message directly by the service provider. However, in the case that the user requests a video in high definition (HD) quality and the network is not able to satisfy these HD quality requirements due to a lack of resources, then the user will get no feedback telling him that the requested video could not be provided in the requested quality.

The present invention exploits the behaviour to implement preferably a network-centric evaluation entity (service quality indicator) which is able to derive a feedback that contains the information whether a requested service by a user is providable in the requested quality. The evaluation entity is preferably aware of the end-to-end network path capabilities of the user as well as the network performance requirements of the application service. Based on this information (available network performance and application requirements) the evaluation entity derives the feedback. Preferably, the network-centric evaluation entity is located in the domain of a network provider or content provider network architecture. The results of the evaluation process can be used as "service quality indicator" in order to perform service control or to provide service quality information to the user. An example for using such service quality related information can for instance be the application server which can be triggered to adapt the service quality depending on the available network performance.

Moreover, the service quality indicator can be applied to enable an "engaged signal" for IP based services or to enable a capacity reservation tool. In addition, the evaluation results can also be used to generate a feedback to the user that informs the user about the expectable service quality regarding the delivery of the requested service. As a result, the user is in advance aware about the provided service quality. In the case the forecasted service quality does not fit to the user expectations the user is able to decide further how to behave. For instance, the user can wait until the network resources are again available or the user can request the service in reduced quality (e.g. reduced video resolution or codec), or the user can buy more network performance / capabilities in the case that the network provider offers such a service on demand. Details about these selection mechanisms as well as the execution that are applied after providing the service quality indication are not in the scope of this application.

The idea of the proposed mechanism is to use the information about the end-to-end network capabilities of the data path between the content provider to the user and the information about the service requirements (e.g. delay, jitter, packet loss) on the network performance in order to derive service quality indication information. The information about the network performance is preferably provided by the access network provider the end user and content provider are connected to. In the following, it is preferably assumed that network overload / bottleneck situations, which influence the end-to-end (E2E) data delivery performance, occur in the access networks only. In the case that network overload / bottleneck situations along the remaining data transport path segments are expected, the information about these network path segments will be considered as well.

The service requirements regarding network performance are preferably provided by the content or application service provider. The evaluation entity, that generates the service quality indication results, is preferably located in the domain of the network provider or content provider network architecture.

The evaluation process is preferably initiated by the application service. The application server of the service provider preferably recognises a service provisioning request from an end user. An integrated mechanism in the application server preferably generates trigger information due to the service request by the end user. This trigger information may be used to inform the evaluation entity about the service request and to initiate the evaluation process. The present invention, however, is not restricted on such trigger information such that initiation of the evaluation process may be based on other trigger information.

The evaluation entity preferably requests the network performance information from the different network access providers and (if needed) also from all the transit network providers along the E2E data path between content provider and end user. Additionally, the evaluation entity may request the application service requirements regarding network performance from the corresponding content provider or application service provider. The different entities are preferably addressed by the IP address. Moreover, it is possible to apply admission control mechanisms in order to allow only authorised entities to communicate with the corresponding entity (e.g. evaluation entity and/or evaluation entity support entity).

The evaluation process is preferably started after receiving all network performance information and service requirement information. The evaluation unit compares the service requirement on network performance with the network capabilities available in the different network segments along the data path, i.e. access networks, transit networks and also the home network. Due to the purpose of the evaluation process the evaluation unit is in the following preferably named "service quality indicator" (SQI) as well. The result of the evaluation process indicates whether the service is realizable in the requested quality.

The evaluation result can be used by the content provider and / or the network provider to generate feedback information to the user. For instance, in the case where the service is not realisable in the requested quality the content provider or network provider are able to inform the user about this fact. The information can be presented to the user by means of a website or via a message box within an application. Due to this the user is informed about the potential service quality to be expected.

In addition to the plain feedback information the evaluation result can be used to setup and offer additional control opportunities for the user. Based on these opportunities the user is hence able to decide about the most convenient way to receive the requested service. One opportunity, the provider could offer, is to deliver the requested service with reduced service quality e.g. reduced video resolution or via a small band codec. Another opportunity could be to offer the user the possibility to buy more network performance / capabilities from the network access provider.

The description focuses on network resource evaluation at service initiation. Moreover, the SQI solution is able to perform network resource evaluation while ongoing service provisioning in order to inform the user about possible quality changes at later time.

Further features of the invention, its nature and various advantages, will be more apparent from the accompanying drawing and the following detailed description of the drawings and the preferred embodiments.

### Brief description of the drawing

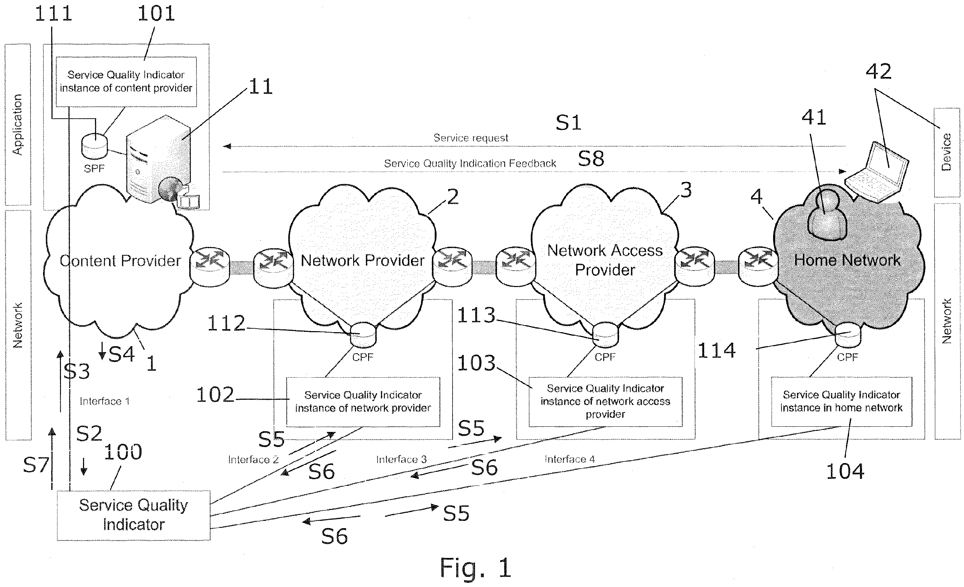

Fig. 1 illustrates an end-to-end (E2E) data delivery path comprising content provider, network provider, network access provider and home network. Moreover, the entity for evaluation of realizable service quality for end users in inter-connected IP-based networks is shown.

### Detailed description of the drawing

The following technical solution according to the present invention describes the "Service Quality Indicator" architecture realised by means of distributed web services. This solution is a concrete realisation of an information/feedback service which could be used to inform the user about the expectable service quality to be delivered. Moreover, the solution could be used to enable absolute quality guarantees in end-to-end IP based service provisioning, e.g. in IP mass market networks due to avoidance of network resource overbooking. The Service Quality Indicator (SQI) entity is the evaluating part of the solution which derives the feedback for the user and/or the information in order to control the network resource overbooking, e.g. in the user access network. The SQI can be applied for quality traffic classes as well as for the best effort traffic class of today's networks. For example, the SQI entity is able to prevent a multi-person household connected to the Internet via VDSL from overbooking the access line capabilities/resources. The SQI prevents demand-induced overload of network capacities for services (e.g. based on the same service type) which are requested at the same period of time. As a result, mutual quality interference of services will be prevented which could occur in the case of many user of a family request several services at the same time.

An illustrative embodiment according to the present invention is given in Fig. 1 with a network architecture that consists of several inter-connected network segments. These network segments are operated by the content provider (CP) 1, the network provider (NP) 2, the network access provider (NAP) 3 and the user 41. The user 41 with its device 42 is connected to the home network 4 (HN). The application server (AS) 11 is preferably located in the content provider network. Preferably, at least one of the network segments home network 4, network access provider 3 and network provider 2 comprise a connectivity profile database (CPDB or CPF) 112,113,114. The CPDB/CPF preferably contains user related network performance capability information regarding the network access provider 3, e.g. delay, jitter, packet loss and preferably also bandwidth characteristics of the other network segments. Besides that, the content provider 1 comprises a service profile database (SPDB or SPF). The SPDB/SPF contains, e.g. application service requirements regarding network performance (e.g. delay, jitter, packet loss and bandwidth) which are needed to deliver the application service in requested quality. Preferably, each entity has its own IP address which is used to requests other entities or to replies to other entities.

In the illustrated example, the user 41 requests via S1 an application service, e.g. video on demand (VoD), in high definition (HD) quality from the content provider 1. The application server 11 recognizes the service request S1 of the device/customer/user. The application server 11 sends a service quality evaluation request (trigger) via interface 1 S2 to the service quality indicator (SQI) entity 100 to start the evaluation process regarding the availability of network resources for a HD video on demand service along the data path. Preferably, at least one, preferably all of the above mentioned network segments, e.g., content provider (CP) 1, network provider (NP) 2, network access provider (NAP) 3 and home network 4 (HN) comprise a service quality indication instance (SQII) 101, 102, 103, 104.

The SQI 100 requests by means of an interface S3, the application service related network performance requirements from the service quality indication instance (SQII) 101 of the content provider 1. SOAP (Simple Object Access Protocol) is a candidate protocol to realize such an interface 1. The SQII obtains the application service requirement information from the service profile database 111 of the content provider and sends this information back to the SQI 100 via S4. Moreover, the SQI 100 requests by means of the interface 2 S5, interface 3 S5 and interface 4 S5 network and also user related network capability information from the several SQIIs 102, 103, 104 located in the network of the NP, NAP and HN. The SQIIs 102, 103, 104 obtain the network performance capability information from the CPDB/CPF 112, 113, 114 and send this information back to the SQI 100 via interface 2 S6, interface 3 S6, interface 4 S6. SOAP is once more a candidate protocol to setup these interface 2 (S5, S6), interface 3 (S5, S6) and interface 4 (S5, S6).

After SQI 100 has received all required information from the content provider and at least one of the network segments, e.g., network access provider and/or home network the evaluation process is started. The SQI 100 compares the available network performance capabilities with the application service requirements on network performance. The result of the evaluation process is sent back from the SQI 100 to the SQII 101 of the content provider 1 via interface 1 S7. The content provider 1 is now aware whether the service that has been requested by the user is realizable in the user requested quality.

The content provider can then use the result of the evaluation process as service quality indication information to inform the user whether the requested service is realizable with the requested quality or not. The service quality indication feedback is provided via S8 to the device 42 of the user 41 by means of, e.g. a popup web page. Another possibility to deliver the feedback to the user is to integrate the feedback information in the application software that is used to request and receive the service.

### References:

1 Antonio J. Elizondo, Mara L. Garca, Hans Joachim Einsiedler, Rudolf Roth, Michael Smirnov, Maurizio Bartoli, Paolo Castelli, Balzs Varga, and Magnus Krampell, "Service Models and Realisation of Differentiated Services Networks", In ITCOM 2001 - The Convergence of Information Technologies and Communications, Denver, Colorado, USA, August 19-24 2001.
2 3rd Generation Partnership Project, IP Multimedia Subsystem (IMS), [Online]. Available: http://www.3gpp.org/article/ims.
3 European Telecommunications Standards Institute (ETSI) Telecommunications and Internet converged Services and Protocols for Advanced Networking (TISPAN), Resource and Admission Control Subsystem (RACS): Functional Architecture, Technical Report ETSI ES 282 003 v3.4.2, 2010.
4 European Telecommunications Standards Institute (ETSI) Telecommunications and Internet converged Services and Protocols for Advanced Networking (TISPAN): Network attachment subsystem (NASS), ETSI ES 282 004 v3.4.1, March 2010.
5 International Telecommunication Union (ITU), Recommendation ITU-T Y.2012 (04/2010) - Functional requirements and architecture of next generation networks, 2010.
6 Economics and Technologies for Inter-Carrier Services (ETICS), INFSO-ICT-248567, Deliverable D4.2 - ETICS architecture and functional entities high level design, June 2011.
7 GSM World, "GSMA OneAPI," March 2012. [Online]. Available: http://www.gsmworld.com/oneapi/
8 Open Mobile Alliance, "Enabler Release Definition for Next Generation Service Interfaces," March 2012. [Online]. Available: http://www.openmobilealliance.org/Technical/release_program/docs/NGSI/V1 _0-20101207-C/OMA-ERELD-NGSI-V1_0-20101207-C.pdf

## Claims

1. A method to evaluate realizable service quality for delivery of services between a content provider (1) and a user (41) over an IP-based network with a plurality of network segments (2, 3, 4), the method comprising the steps:
a. sending (S1), by the user (41), using a device (42), an application service request to the content provider (1);
b. initiating (S2), by the content provider (1), a network capability discovery process on a network-centric evaluation entity (100) for the requested application service;
c. requesting (S3), by said network-centric evaluation entity (100), application service related requirements regarding network performance from a first evaluation entity support entity (101) at the content provider (1);
d. sending (S4), by the first evaluation entity support entity (101) at the content provider (1), application service related requirements regarding network performance to the evaluation entity (100);
e. requesting (S5), by the evaluation entity (100), network performance information from second evaluation entity support entities (102, 103, 104) on said network segments (2, 3, 4); sending (S6), by the second evaluation entity support entities (102, 103, 104) of said network segments (2, 3, 4), available network performance information on available network capability on said network segments (2, 3, 4) from evaluation entity support entities (102, 103, 104) in said network segments (2, 3, 4) to said evaluation entity (100);
f. comparing, by said network-centric evaluation entity (100) the received available network performance information with the application service related requirements on network performance, which results in information whether the requested application service can be provided in the requested quality;
g. sending (S7), by said network-centric evaluation entity (100), the information whether the requested application service can be provided in the requested quality to the first evaluation entity support entity (101) at the content provider (1); and
h. sending (S8), by the content provider (1), a forecast service quality indication feedback based on the information whether the requested application service can be provided in the requested quality to the device (42) to inform the user (41) in advance whether the requested application service is realizable in the user (41) requested quality,
i. wherein in case the forecasted service quality indication feedback does not fit the user expectations, the user (41) is able to request the service in reduced quality or to buy more network performance.

2. The method of claim 1, wherein an application server (11) is located in the network of the content provider (1), and said application service request (S1) from the user (41) is preferably sent to the application server (11) via the content provider (1); said application server (11) preferably initiates via S2 the network capability discovery process when the application service request (S1) is recognized.

3. The method of claim 2, wherein the first evaluation entity support entity (101) at the content provider obtains the application service related requirements from a service profile database (111) which is connected to the application server (11), said service profile database (111) contains application service requirements regarding network performance which are used to deliver the application service in requested quality.

4. The method of any of claims 1, 2 or 3, wherein the second evaluation entity support entities (102, 103, 104) obtain the available network performance information from corresponding connectivity profile databases (112, 113, 114) which are connected to the corresponding network segments (2, 3, 4), said connectivity profile databases (112, 113, 114) contain user related network performance capability information regarding the network access provider 3.

5. The method of any of the preceding claims, wherein at least one identifier for the user (41), application service and device (42) for which the network capability discovery process has been initiated is sent to the application server (1).

6. The method of any of the preceding claims, wherein user (41) and/or device (42) are identified by using the IP address, IPv6 address/prefix and/or MAC addresses of its network interfaces or by using other means for user or device identification.

7. The method of any of the preceding claims, wherein further information about network capabilities includes maximal available bandwidth as well as any other network capability related information.

8. The method of any of the preceding claims, whereby IP address or IPv6 address prefix or also any other parameter for the identification of a device is the key field to identify the suitable evaluation entity support entities.

9. System configured to evaluate the realizable service quality for users in IP-based networks adapted to conduct the method of any of claims 1 to 8, the system comprising:
• an evaluation entity (100) adapted to conduct a network capability discovery process for a requested application service (S1);
• a first evaluation entity support entity (101) at a content provider (1) adapted to send application service related requirements regarding network performance from said evaluation entity support entity (101) at the content provider (1) to the evaluation entity (100);
• second evaluation entity support entities (102, 103, 104) at/in network segments (2, 3, 4) adapted to send available network performance information on available network capability on said network segments (2, 3, 4) to said evaluation entity (100);
• wherein said evaluation entity (100) is further adapted to compare the received available network performance information with the received application service related requirements, and to send result (S7) on the basis of said comparing from the evaluation entity (100) to the evaluation entity support entity (101) at the content provider (1) such that the content provider (1) is aware whether the requested application service is realizable.

## Patentansprüche

1. Verfahren zum Bewerten der realisierbaren Dienstqualität zur Lieferung von Diensten zwischen einem Inhaltsanbieter (1) und einem Benutzer (41) über ein IP-basiertes Netzwerk mit einer Vielzahl von Netzwerksegmenten (2, 3, 4), wobei das Verfahren die Schritte aufweist:
a. Senden (S1) durch den Benutzer (41) mittels einer Vorrichtung (42) einer Anwendungsdienstanforderung an den Inhaltsanbieter (1);
b. Einleiten (S2) durch den Inhaltsanbieter (1) eines Prozesses zur Feststellung der Netzwerkfähigkeiten auf einer netzwerkzentrischen Bewertungsentität (100) für den angeforderten Anwendungsdienst;
c. Anfordern (S3) durch die netzwerkzentrische Bewertungsentität (100) von mit dem Anwendungsdienst zusammenhängenden Erfordernissen hinsichtlich der Netzwerkleistung von einer ersten Unterstützungsentität (101) der Bewertungsentität beim Inhaltsanbieter (1);
d. Senden (S4) durch die erste Unterstützungsentität (101) der Bewertungsentität beim Inhaltsanbieter (1) von mit dem Anwendungsdienst zusammenhängenden Erfordernissen hinsichtlich der Netzwerkleistung an die Bewertungsentität (100);
e. Anfordern (S5) durch die Bewertungsentität (100) von Netzwerkleistungsinformationen von zweiten Unterstützungsentitäten (102, 103, 104) der Bewertungsentität an den Netzwerksegmenten (2, 3, 4); Senden (S6) durch die zweiten Unterstützungsentitäten (102, 103, 104) der Bewertungsentität der Netzwerksegmente (2, 3, 4) von Informationen über die verfügbare Netzwerkleistung über die verfügbare Netzwerkfähigkeit an den Netzwerksegmenten (2, 3, 4) von den Unterstützungsentitäten (102, 103, 104) der Bewertungsentität in den Netzwerksegmenten (2, 3, 4) an die Bewertungsentität (100);
f. Vergleichen durch die netzwerkzentrische Bewertungsentität (100) der empfangenen Informationen über die verfügbare Netzwerkleistung mit den mit dem Anwendungsdienst zusammenhängenden Erfordernissen der Netzwerkleistung, was zu Informationen führt, ob der angeforderte Anwendungsdienst in der angeforderten Qualität bereitgestellt werden kann;
g. Senden (S7) durch die netzwerkzentrische Bewertungsentität (100) der Informationen, ob der angeforderte Anwendungsdienst in der angeforderten Qualität bereitgestellt werden kann, an die erste Unterstützungsentität (101) der Bewertungsentität beim Inhaltsanbieter (1); und
h. Senden (S8) durch den Inhaltsanbieter (1) einer Anzeigerückmeldung der Vorhersagedienstqualität beruhend auf den Informationen, ob der angeforderte Anwendungsdienst in der angeforderten Qualität bereitgestellt werden kann, an die Vorrichtung (42), um den Benutzer (41) im Voraus zu informieren, ob der angeforderte Anwendungsdienst in der vom Benutzer (41) angeforderten Qualität realisierbar ist,
i. wobei im Fall, dass die Anzeigerückmeldung der Vorhersagedienstqualität die Erwartungen des Benutzers nicht erfüllt, der Benutzer (41) imstande ist, den Dienst in einer reduzierten Qualität anzufordern oder mehr Netzwerkleistung zu kaufen.

2. Verfahren nach Anspruch 1, wobei sich ein Anwendungsserver (11) im Netzwerk des Inhaltsanbieters (1) befindet, und die Anwendungsdienstanforderung (S1) vom Benutzer (41) vorzugsweise über den Inhaltsanbieter (1) an den Anwendungsserver (11) gesendet wird; der Anwendungsserver (11) vorzugsweise mittels S2 den Prozess zur Feststellung der Netzwerkfähigkeiten einleitet, wenn die Anwendungsdienstanforderung (S1) erkannt wird.

3. Verfahren nach Anspruch 2, wobei die erste Unterstützungsentität (101) der Bewertungsentität beim Inhaltsanbieter die mit dem Anwendungsdienst zusammenhängenden Erfordernisse aus einer Dienstprofildatenbank (111) erhält, die mit dem Anwendungsserver (11) verbunden ist, wobei die Dienstprofildatenbank (111) Anwendungsdiensterfordernisse hinsichtlich der Netzwerkleistung enthält, die verwendet werden, um den Anwendungsdienst in der angeforderten Qualität zu liefern.

4. Verfahren nach einem der Ansprüche 1, 2 oder 3, wobei die zweiten Unterstützungsentitäten (102, 103, 104) der Bewertungsentität die Informationen über die verfügbare Netzwerkleistung von entsprechenden Konnektivitätsprofildatenbanken (112, 113, 114) erhalten, die mit den entsprechenden Netzwerksegmenten (2, 3, 4) verbunden sind, wobei die Konnektivitätsprofildatenbanken (112, 113, 114) benutzerbezogene Information über die Netzwerkleistungsfähigkeit hinsichtlich des Netzwerkzugangsanbieters 3 enthalten.

5. Verfahren nach einem der vorhergehenden Ansprüche, wobei mindestens eine Kennung für den Benutzer (41), den Anwendungsdienst und die Vorrichtung (42), für die der Prozess zur Feststellung der Netzwerkfähigkeiten eingeleitet worden ist, an den Anwendungsserver (1) gesendet wird.

6. Verfahren nach einem der vorhergehenden Ansprüche, wobei ein Benutzer (41) und/oder Vorrichtung (42) durch Verwenden der IP-Adresse, der IPv6-Adresse/Präfix und/oder MAC-Adressen seiner Netzwerkschnittstellen oder durch Verwenden anderer Mittel zur Benutzer- oder Vorrichtungsidentifikation identifiziert wird.

7. Verfahren nach einem der vorhergehenden Ansprüche, wobei weitere Informationen über Netzwerkfähigkeiten die maximal verfügbare Bandbreite sowie irgendwelche andere mit der Netzwerkfähigkeit zusammenhängende Informationen umfassen.

8. Verfahren nach einem der vorhergehenden Ansprüche, wobei die IP-Adresse, der IPv6-Adresse Präfix oder auch irgendein anderer Parameter für die Identifikation einer Vorrichtung das Schlüsselfeld ist, um die geeigneten Unterstützungsentitäten der Bewertungsentität zu identifizieren.

9. System, das konfiguriert ist, die realisierbare Dienstqualität für Benutzer in IP-basierten Netzwerken zu bewerten, die eingerichtet sind, das Verfahren nach einem der Ansprüche 1 bis 8 auszuführen, wobei das System aufweist:
• eine Bewertungsentität (100), die eingerichtet ist, einen Prozess zur Feststellung der Netzwerkfähigkeiten für einen angeforderten Anwendungsdienst (S1) durchzuführen;
• eine erste Unterstützungsentität (101) der Bewertungsentität bei einem Inhaltsanbieter (1), die eingerichtet ist, mit dem Anwendungsdienst zusammenhängende Erfordernisse hinsichtlich der Netzwerkleistung von der Unterstützungsentität (101) der Bewertungsentität beim Inhaltsanbieter (1) zur Bewertungsentität (100) zu senden;
• zweite Unterstützungsentitäten (102, 103, 104) der Bewertungsentität an/in Netzwerksegmenten (2, 3, 4), die eingerichtet sind, Informationen über die verfügbare Netzwerkleistung über die verfügbare Netzwerkfähigkeit an den Netzwerksegmenten (2, 3, 4) an die Bewertungsentität (100) zu senden;
• wobei die Bewertungsentität (100) ferner eingerichtet ist, die empfangenen Informationen über die verfügbare Netzwerkleistung mit den empfangenen mit dem Anwendungsdienst zusammenhängenden Erfordernissen zu vergleichen, und das Resultat (S7) auf der Grundlage des Vergleichs von der Bewertungsentität (100) an die Unterstützungsentität (101) der Bewertungsentität beim Inhaltsanbieter (1) zu senden, so dass der Inhaltsanbieter (1) sich bewusst ist, ob der angeforderte Anwendungsdienst realisierbar ist.

## Revendications

1. Procédé d'évaluation d'une qualité de service réalisable pour la fourniture de services entre un fournisseur de contenu (1) et un utilisateur (41) via un réseau à base IP avec une pluralité de segments de réseau (2, 3, 4), ledit procédé comprenant les étapes suivantes :
a. envoi (S1) par l'utilisateur (41) au moyen d'un dispositif (42) d'une demande de service d'application au fournisseur de contenu (1) ;
b. déclenchement (S2) par le fournisseur de contenu (1) d'un processus de découverte de capacité de réseau sur une entité d'évaluation réseaucentrique (100) pour le service d'application demandé ;
c. demande (S3) par l'entité d'évaluation réseaucentrique (100), à une première entité d'assistance (101) d'entité d'évaluation chez le fournisseur de contenu (1) de service d'application, de spécifications relatives au service d'application concernant la performance de réseau ;
d. envoi (S4) par la première entité d'assistance (101) d'entité d'évaluation chez le fournisseur de contenu (1), à l'entité d'évaluation (100), de spécifications relatives au service d'application concernant la performance de réseau ;
e. demande (S5) par l'entité d'évaluation (100), à des deuxièmes entités d'assistance (102, 103, 104) d'entité d'évaluation, d'informations de performance de réseau sur les segments de réseau (2, 3, 4) ; envoi (S6), par les deuxièmes entités d'assistance (102, 103, 104) d'entité d'évaluation des segments de réseau (2, 3, 4), à l'entité d'évaluation (100), d'informations de performance de réseau disponibles sur la capacité de réseau disponible sur les segments de réseau (2, 3, 4) provenant d'entités d'assistance (102, 103, 104) d'entité d'évaluation dans les segments de réseau (2, 3, 4) ;
f. comparaison par l'entité d'évaluation réseaucentrique (100) des informations de performance de réseau disponibles reçues avec les spécifications relatives au service d'application concernant la performance de réseau, aboutissant à une information si le service d'application demandé peut être fourni à la qualité exigée ;
g. envoi (S7) par l'entité d'évaluation réseaucentrique (100), à la première entité d'assistance (101) d'entité d'évaluation chez le fournisseur de contenu (1), de l'information si le service d'application demandé peut être fourni à la qualité exigée ; et
h. envoi (S8) par le fournisseur de contenu (1) au dispositif (42), d'un retour d'indication de qualité de service prévisionnelle basé sur l'information si le service d'application demandé peut être fourni à la qualité exigée pour informer préalablement l'utilisateur (41) si le service d'application demandé est réalisable avec la qualité exigée par l'utilisateur (41),
i. l'utilisateur (41) étant apte à demander le service avec une qualité réduite ou à acquérir une performance de réseau supérieure, dans le cas où le retour d'indication de qualité de service prévisionnelle ne satisfait pas aux attentes de l'utilisateur.

2. Procédé selon la revendication 1, où un serveur d'applications (11) est situé dans la zone du fournisseur de contenu (1), et où la demande de service d'application (S1) de l'utilisateur (41) est préférentiellement adressée au serveur d'applications (11) via le fournisseur de contenu (1) ; où le serveur d'applications (11) déclenche préférentiellement via S2 le processus de découverte de capacité de réseau quand la demande de service d'application (S1) est reconnue.

3. Procédé selon la revendication 2, où la première entité d'assistance (101) d'entité d'évaluation chez le fournisseur de contenu obtient les spécifications relatives au service d'application d'une base de données de profils de service (111) reliée au serveur d'applications (11), ladite base de données de profils de service (111) contenant les spécifications relatives au service d'application concernant la performance de réseau utilisées pour fournir le service d'application à la qualité exigée.

4. Procédé selon la revendication 1, la revendication 2 ou la revendication 3, où les deuxièmes entités d'assistance (102, 103, 104) d'entité d'évaluation obtiennent les informations de performance de réseau disponibles de bases de données de profils de connectivité (112, 113, 114) correspondantes reliées aux segments de réseau (2, 3, 4) correspondants, lesdites bases de données de profils de connectivité (112, 113, 114) contenant des informations de capacité de performance de réseau liées à l'utilisateur relatives au fournisseur d'accès au réseau 3.

5. Procédé selon l'une des revendications précédentes, où au moins un identifiant pour l'utilisateur (41), le service d'application et le dispositif (42) pour lesquels le processus de découverte de capacité de réseau a été déclenché est adressé au serveur d'applications (1).

6. Procédé selon l'une des revendications précédentes, où l'utilisateur (41) et/ou le dispositif (42) sont identifiés au moyen de l'adresse IP, de l'adresse/ préfixe IPv6 et/ou des adresses MAC de ses interfaces réseau ou par d'autres moyens d'identification d'utilisateur ou de dispositif.

7. Procédé selon l'une des revendications précédentes, où des informations complémentaires sur les capacités de réseau comprennent une largeur de bande maximale ainsi que toute autres informations relatives à la capacité de réseau.

8. Procédé selon l'une des revendications précédentes, où l'adresse IP ou l'adresse préfixe IPv6 ou tout autre paramètre pour l'identification d'un dispositif est le champ clé permettant d'identifier les entités d'assistance d'entité d'évaluation appropriées.

9. Système pour l'évaluation de la qualité de service réalisable pour des utilisateurs dans des réseaux à base IP, prévu pour exécuter le procédé selon l'une des revendications 1 à 8, ledit système comprenant :
• une entité d'évaluation (100) prévue pour exécuter un processus de découverte de capacité de réseau pour un service d'application demandé (S1) ;
• une première entité d'assistance (101) d'entité d'évaluation chez un fournisseur de contenu (1), prévue pour envoyer à l'entité d'évaluation (100) des spécifications relatives au service d'application concernant la performance de réseau de l'entité d'assistance (101) d'entité d'évaluation chez le fournisseur de contenu (1) ;
• des deuxièmes entités d'assistance (102, 103, 104) d'entité d'évaluation sur/dans des segments de réseau (2, 3, 4), prévues pour envoyer à l'entité d'évaluation (100) des informations de performance de réseau disponibles sur la capacité de réseau disponible sur les segments de réseau (2, 3, 4) ;
• l'entité d'évaluation (100) étant en outre prévue pour comparer les informations de performance de réseau disponibles reçues avec les spécifications relatives au service d'application reçues, et pour adresser le résultat (S7) à l'entité d'assistance (101) d'entité d'évaluation chez le fournisseur de contenu (1) sur la base de la comparaison de l'entité d'évaluation (100), de manière à rendre le fournisseur de contenu (1) conscient de la possibilité de réaliser le service d'application demandé.
